(19) Europäisches Patentamt
European Patent Office
Office européen des brevets

(11) **EP 4 668 820 A1**

(12) **EUROPEAN PATENT APPLICATION**
published in accordance with Art. 153(4) EPC

(43) Date of publication:
**24.12.2025 Bulletin 2025/52**

(21) Application number: **23921936.3**

(22) Date of filing: **16.02.2023**

(51) International Patent Classification (IPC):
**H04W 16/26** $^{(2009.01)}$

(52) Cooperative Patent Classification (CPC):
**H04W 16/26**

(86) International application number:
**PCT/CN2023/076646**

(87) International publication number:
**WO 2024/168782 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Fujitsu Limited**
**Kawasaki-shi, Kanagawa 211-8588 (JP)**

(72) Inventors:
• **JIANG, Qinyan**
  **Beijing 100022 (CN)**
• **ZHANG, Lei**
  **Beijing 100022 (CN)**
• **TIAN, Yan**
  **Beijing 100022 (CN)**

(74) Representative: **Haseltine Lake Kempner LLP**
**Cheapside House**
**138 Cheapside**
**London EC2V 6BJ (GB)**

(54) **INFORMATION SENDING METHOD, INFORMATION RECEIVING METHOD, REPEATER AND NETWORK DEVICE**

(57) Embodiments of this disclosure provide an information transmitting method, an information receiving method, a repeater and a network device. The information receiving method includes: receiving by the repeater indication information for indicating an access link beam, the indication information including a first information field for indicating a beam on an access link and a second information field for indicating a time resource, the time resource being related to a first subcarrier spacing and/or a second subcarrier spacing.

201

> the repeater receives indication information for indicating an access link beam, the indication information comprising a first information field for indicating a beam on an access link and a second information field for indicating a time resource, the time resource being related to a first subcarrier spacing and/or a second subcarrier spacing

**Fig. 2**

EP 4 668 820 A1

**Description**

Technical Field

This disclosure relates to the field of communication technologies.

Background

Compared with legacy 3G (third generation mobile communication technology) and 4G (fourth generation mobile communication technology) systems, a 5G (fifth generation mobile communication technology) system can provide larger bandwidths and higher data rates, and is able to support more types of terminals and vertical services.

For this reason, 5G systems are also deployed at new spectra in addition to legacy telecommunications spectra, and frequencies of the spectra are obviously higher than those of legacy telecommunications spectra used in 3G and 4G systems. For example, a 5G system may be deployed in a millimeter waveband (such as 28 GHz, 38GHz, 60 GHz, and higher wavebands).

According to the principle of propagation of wireless signals, the higher a carrier frequency, the more severe a fading experienced by signals during transmission. Therefore, in actual deployment, a 5G system needs a cell coverage enhancement method more than 3G and 4G systems need, especially a 5G system deployed in a millimeter waveband. Hence, how to better enhance cell coverage of a 5G system has become an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

In order to better solve the coverage problem of cellular mobile communication systems in practical deployment, use of a radio frequency (RF) relay/repeater to amplify and forward signals between a terminal equipment (UE) and a network device is commonly used means of deployment. RF repeaters are widely used in actual deployment of 3G and 4G systems. Generally speaking, an RF repeater is a device that amplifies and forwards signals between devices in the RF domain. That is, an RF repeater is a non-regenerative relay node, which only directly amplifies and forwards all received signals.

It was found by the inventors that for a coverage problem encountered in deploying a 5G system, performing coverage enhancement by using a legacy RF repeater is one of feasible solutions. However, as a forwarding behavior of a legacy RF repeater is not controlled by a network, on the one hand, an effect of amplifying and forwarding a target signal by the repeater may possibly be not ideal, and on the other hand, it may pose significant interference to other devices in the network, and increase noise and interference levels of the system, thereby reducing network throughput. Specifically, taking an antenna direction as an example, compared to 2G, 3G and 4G systems, a 5G system adopts the more advanced and complex MIMO (multiple-input multiple-output) technology. In the 5G system, especially for higher carrier frequencies, directional antennas have become basic components of a network device and a terminal equipment. Transmitting and receiving signals based on a beamforming technology is a fundamental signal transmission mode in the 5G system. (Simulated) beam directions and widths, etc., of the network device and terminal equipment may dynamically change (i.e. beam switching) due to such factors as changes of positions. However, antennas of a legacy RF repeater may not be dynamically adjusted with respect to directions and have relatively wide beams, and beam directions and beam widths of transmitting and receiving antennas of the RF repeater are unable to flexibly match positions of the network device and terminal equipment and dynamic changes of the beam directions and widths of the transmitting and receiving antennas. If such an RF repeater is configured in the 5G system, on the one hand, its performance/effect of amplifying/enhancing target signals is/are not significant due to that the beam directions and beam widths of its transmitting and receiving antennas do not match the beam directions and beam widths of the network device and terminal equipment, and on the other hand, it may also cause significant interference to other devices (e.g. a network device or a terminal equipment) within a larger range due to use of wider transmitting beams, and increase noise and interference levels of the entire system, thereby reducing network throughput.

A network controlled repeater (NCR) scheme is proposed in 3GPP Rel-18 to enhance NR coverage, so as to forward signals between a network device and a terminal equipment. NCR may directly communicate with the network device via control links to assist in forwarding operations of the NCR.

It was found by the inventors that how a repeater indicates/determines an access link beam, especially how to indicate/determine a subcarrier spacing used for determining a time resource to which a beam on an access link corresponds has become an urgent problem to be solved.

In order to solve at least one of the above problems, embodiments of this disclosure provide an information transmitting method, an information receiving method, a repeater and a network device.

According to one aspect of the embodiments of this disclosure, there is provided a network device, including: a transmitting unit configured to transmit indication information for indicating an access link beam to a repeater, the indication information including a first information field for indicating a beam on an access link and a second information field for indicating a time resource, the time resource being related to a first subcarrier spacing and/or a second subcarrier spacing.

According to another aspect of the embodiments of this disclosure, there is provided a repeater, including: a receiving unit configured to receive indication information for indicating an access link beam, the indication information including a first information field for indicating a beam on an access link and a second information field for indicating a time resource, the time resource being related to a first subcarrier spacing and/or a second subcarrier spacing.

According to a further aspect of the embodiments of this disclosure, there is provided a communication system, including the repeater as described in the other aspect and/or the network device as described in the one aspect.

An advantage of the embodiments of this disclosure exists in that the time resource to which the access link beam corresponds is related to the first subcarrier spacing and/or the second subcarrier spacing, hence, the corresponding time resource when the repeater performs forwarding is enabled to match with corresponding time resource for receiving or transmitting signals between the network device and the UE, thereby improving the effect of amplifying/enhancing signals, saving power consumption of the repeater, reducing interference to other devices in the network, and improving throughput of the network.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is schematic diagram of a communication system of embodiments of this disclosure;
FIG. 2 is a schematic diagram of an information receiving method of embodiments of this disclosure;
FIGs. 3A-3E are schematic diagrams of time resources of the embodiments of this disclosure;
FIGs. 4A-4D are schematic diagrams of time resources of the embodiments of this disclosure;
FIGs. 5A-5E are schematic diagrams of time resources of the embodiments of this disclosure;
FIGs. 6A-6G are schematic diagrams of time resources of the embodiments of this disclosure;
FIGs. 7A-7D are schematic diagrams of time resources of the embodiment of this disclosure;
FIG. 8 is a schematic diagram of time resources of the embodiments of this disclosure;
FIG. 9 is a schematic diagram of an information transmitting method of embodiments of this disclosure;
FIG. 10 is a schematic diagram of a repeater of embodiments of this disclosure;
FIG. 11 is a schematic diagram of a network device of embodiments of this disclosure; and
FIG. 12 is a schematic diagram of an electronic device of embodiments of this disclosure.

Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), an IAB-MT, or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, existing traffics or traffics that may be implemented in the future may be performed between a network device and a terminal equipment. For example, such traffics may include but not limited to enhanced mobile broadband (eMBB), massive machine type communication (mMTC), ultra-reliable and low-latency communication (URLLC), and vehicle to everything (V2X) communication, etc.

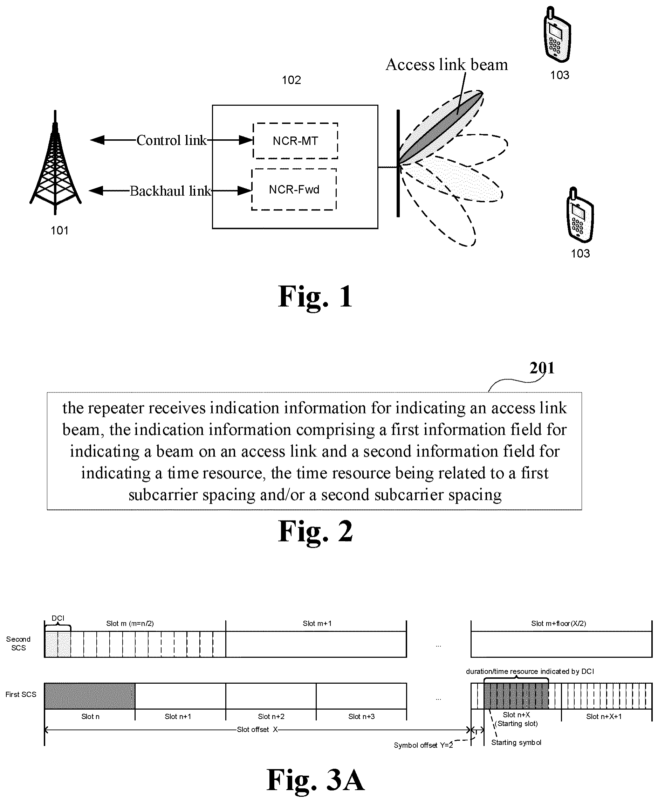

FIG. 1 is schematic diagram of an NCR of embodiments of this disclosure. As shown in FIG. 1, NCR 102 is configured between a network device 101 and a terminal equipment 103. NCR 102 may include the following two modules/components: a mobile termination of the repeater (NCR-MT) and a forwarding unit of the repeater (NCR-Fwd). The NCR-Fwd may also be referred to as a routing unit of the NCR (NCR-RU). The NCR-MT is used for communication with the network device (information exchange), the NCR-Fwd is used for forwarding signals between the network device and the terminal equipment, and the NCR-MT and NCR-Fwd are functional entities, with functions thereof being implemented by identical or different hardware modules.

As shown in FIG. 1, the NCR of the embodiments of this disclosure may have three links: a control link (C-link), a backhaul link (BH link) for forwarding, and an access link (AC link, also referred to as an NCR-UE link), wherein the C-link is used for communication between the NCR and the network device, the BH link is used by the repeater to receive signals to be forwarded from the network device, or forward signals from the terminal equipment to the network device, and the AC link is used by the repeater to forward signals from the network device to the terminal equipment, or receive signals to be forwarded from the terminal equipment. Specifically, the NCR-MT communicates with the network device via the C-link, and the NCR-Fwd forwards signals via the BH link and the AC link.

In the embodiments of this disclosure, the repeater may communicate with the network device, receive communication channels/signals transmitted by the network device, and demodulate/decode the channels/signals to obtain information transmitted by the network device to the repeater. A signal processing process is hereinafter referred to as "communication". The repeater may also forward channels/signals transmitted between the network device and the terminal equipment, does not demodulate/decode the channels/signals, and may perform amplification, etc. A signal processing process is hereinafter referred to as "forwarding", and "communication" and "forwarding" are collectively referred to as "transfer". In addition, 'performing transmission or reception on the AC link (or the BH link)' may be equivalent to 'performing forwarding on the AC link (or the BH link)', and 'performing transmission or reception on the control link' may be equivalent to 'performing communication on the control link'. The above terms are for convenience of explanation only, and are not intended to limit this disclosure. In some cases, "a forwarding unit" and "a forwarding behavior" are interchangeable.

In the embodiments of this disclosure, the repeater may also be expressed as a network-controlled repeater (NCR), a radio frequency repeater, a relay, a radio frequency relay; or, it may also be expressed as a repeater node, or a relay node; or, it may also be expressed as an intelligent repeater, an intelligent relay, an intelligent repeater node, an intelligent relay node, etc.; however, this disclosure is not limited thereto.

In the embodiments of this disclosure, the network device may be a device of a serving cell of the terminal equipment, or a device in a cell where the repeater is located, or a device of a serving cell of the repeater, or a parent node of the repeater. Names of the repeater are not limited in this disclosure, and any device able to achieve the above functions is included in the scope of the repeater of this disclosure.

In the embodiments of this disclosure, higher-layer signaling may be, for example, radio resource control (RRC) signaling; for example, it includes an RRC message, which includes a master information block (MIB), system information, and a dedicated RRC message; or, it is an RRC information element (RRC IE); or an information field (or an information field included in an information field) included in an RRC message or an RRC information element. Higher-layer signaling may also be, for example, medium access control (MAC) signaling, or referred to as an MAC control element (MAC CE); however, this disclosure is not limited thereto.

In the embodiments of this disclosure, multiple means at least two, or two or more than two.

In the embodiments of this disclosure, "predefined" means defined in a protocol or determined according to a rule defined in a protocol, without needing additional configuration. Configuration/indication refer(s) to configuring/indicating directly or indirectly by a network device via higher-layer signaling and/or physical layer signaling. The physical layer signaling refers to, for example, control information (DCI) carried by a physical control channel or control information carried by a sequences. However, it is not limited thereto, and configuration/indication may be performed by introducing a higher-layer parameter into the higher-layer signaling, the higher-layer parameter referring to an information field and/or an information element (IE) in the higher-layer signaling.

Implementations of the embodiments of this disclosure shall be described below with reference to the accompanying drawings. These implementations are illustrative only, and are not intended to limit this disclosure.

Embodiments of a first aspect

The embodiments of this disclosure provide an information receiving method, which shall be described from a repeater side.

FIG. 2 is a schematic diagram of the information receiving method of the embodiments of this disclosure. As shown in FIG. 2, the method includes:

201: the repeater receives indication information for indicating an access link beam, the indication information including a first information field for indicating a beam on an access link and a second information field for indicating a time resource, the time resource being related to a first subcarrier spacing and/or a second subcarrier spacing.

It should be noted that FIG. 2 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 2.

In some embodiments, the indication information includes first beam indication information and/or second beam indication information. The first beam indication information is periodic access link beam indication information, and/or is carried by RRC signaling. The second beam indication information is aperiodic access link beam indication information, and/or is carried by DCI. In the following description, the second beam indication information and DCI (carrying the second beam indication information) are interchangeable.

(I) For the first beam indication information

In some embodiments, the first beam indication information may be a newly introduced information field (higher-layer parameter) in RRC signaling, which includes one or more periodic beam indications for the access link (first beam indications). Each first beam indication includes a forwarding resource list, each of which including a first information field indicating a beam on an access link and a second information field indicating a time resource, the second information field including duration information and/or offset information of a time resource in a period; in addition, the first beam indication may include period information (for all time resources indicated by the first beam indication information) and/or priority information; furthermore, the first beam indication information may include a third information field for indicating a first subcarrier spacing. The indicated first subcarrier spacing is for all time resources indicated by the first beam indication information. For example, all the time resources indicated by the first beam indication information are related to the first subcarrier spacing, including that duration information and/or offset information of each time resource is/are related to the first subcarrier spacing. Time units of the duration information and/or offset information may be milliseconds or slots or symbols, and duration(s) thereof is/are related to the first subcarrier spacing; however, the embodiments of this disclosure is not limited thereto.

In some embodiments, the network device may transmit one or more first beam indication information to the NCR, each of first beam indication information including one or more of the above first information field, the second information field, the third information field, the period information and the priority information. For example, configuration is performed in a manner of ToAddModList or in other lists manners. Hence, one or more lists may be configured, wherein one list includes one first beam indication information, thereby supporting one or more first beam indication information.

In some embodiments, the RRC signaling includes an RRC Reconfiguration message, and/or an RRC Release message, and/or a first RRC message, the first RRC message being an NCR-specific RRC message.

In some embodiments, the first RRC message may include other information in addition to the first beam indication information, such as configuration information related to the second beam indication information, such as relevant configuration of the first information field and the second information field in the DCI (such as a time-domain resource list configuration described below, etc.) in (II); however, the embodiments of this disclosure is not limited thereto.

In some embodiments, after receiving the first beam indication information, the NCR needs to receive another indication before starting to perform forwarding by using a corresponding access link beam in the indicated time resource according to the first beam indication information, or, after receiving the first beam indication information, the NCR does not need to receive another indication before starting to perform forwarding by using a corresponding access link beam in the indicated time resource according to the first beam indication information.

In some embodiments, whether the NCR supports the first beam indication information is optional (may or may not support), or mandatory (support), or conditionally mandatory (e.g. support when a condition (e.g. operating frequency band FR2) is satisfied).

(2) For the second beam indication information

In some embodiments, the second beam indication information (DCI) may include one or more first information fields for indicating beams and one or more second information fields for indicating time resources. This DCI may be downlink control information having/using a first DCI format, which is used for access link beam indications. The downlink control information in the first DCI format is not used for scheduling PDSCHs or PUSCHs, or, the downlink control information in the first DCI format may also be used for scheduling PDSCHs or PUSCHs. The first DCI format may be a newly-introduced DCI format (e.g. DCI format 2_8, or 2_9, or 2_10, etc.), or may be an existing DCI format (e.g. 1_1, or 2_0, etc.) (the existing DCI format still supports functions in the embodiments of this disclosure); however, the embodiments of this disclosure are not limited thereto.

In some embodiments, "the downlink control information in the first DCI format" or "the downlink control information using the first DCI format" or "the DCI in the first DCI format" or "the second beam indication information" or "the DCI" may also be replaced with "the first DCI format".

In some embodiments, one first information field is used to indicate one beam index on an access link, or indicate at most one beam index on an access link, or indicate multiple beam indices on the access link(s). The beam index on an access link may include a beam index corresponding to a beam on an access link (or a (actual) physical beam) and/or a beam index not corresponding to a beam (or a (actual) physical beam).

In some embodiments, a beam index range is predefined and/or is configured/indicated by higher-layer signaling. For example, all beam indices within the beam index range are predefined or are configured/indicated by the higher-layer signaling, or some beam indices therein are predefined while others are configured/indicated by the higher-layer signaling. For the latter case, for example, beam indices corresponding beams are predefined, while beam indices not corresponding to beams are configured/indicated by the higher-layer signaling; however, it is not limited thereto.

In some embodiments, one second information field is used to indicate one time resource index, or indicate at most one time resource index, or indicate multiple time resource indices. The index may be replaced with a sequence number.

In some embodiments, the second information field corresponds to a time-domain resource table. The time-domain resource table is predefined and/or is configured by the above first RRC message or other RRC messages. The time-domain resource table includes one or more time resource configurations, and the time-domain resource (TDRA) table (or simply referred to as a TDRA table) includes at least one row (column). For ease of description, one row (column) is hereinafter referred to as one TDRA configuration, and one TDRA configuration includes one or more time resources or does not include a time resource. A time resource is continuous or discontinuous.

In some embodiments, a time resource is, for example, defined by one or more of the following parameters: a slot offset $K_3$, a symbol offset S, a duration L used to determine a time resource, and a subcarrier spacing. These parameters are respectively predefined and/or are configured by higher-layer signaling. Slot offset $K_3$ refers to an offset between a starting slot of a time resource or a first slot corresponding to/overlapping with/associated with the starting slot of the time resource and a reference point. The reference point may be determined at least based on a slot or symbol where the DCI carrying the second beam indication information is located, or a slot or symbol where a PUCCH/PUSCH of HARQ feedback for the DCI or PDCCH carrying the second beam indication information is located. If a time resource configuration includes multiple time resources, reference points of slot offsets of different time resources are identical (for example, all of them are determined at least based on the slot or symbol where the DCI of the second beam indication information is located) or different (for example, for a first time resource, they are determined at least based on the slot or symbol where the DCI of the second beam indication information is located, and for subsequent time resources, they are determined at least based on a slot or symbol where a previous time resource is located). The symbol offset S refers to an offset between a first one of symbols of a time resource and a boundary/starting symbol/first one of symbols of the above starting slot or a starting symbol/first one of symbols of the DCI or PDCCH/PDCCH MO carrying the second beam indication information. The duration L of the time resource, for example, denotes the number of symbols contained in the time resource. The symbol offset S and/or the duration L of the time resource must ensure that the configured time resource is within the same slot, or that the configured time resource may be within the same slot or may be across slots. Numbers of time resources included in each configuration in the time-domain resource table are identical or different.

In some embodiments, time resources in one configuration may be defined in a form of a list or sequence. For example, an IE is introduced, which includes parameters of one time resource defined above. One configuration includes one list or sequence, the list or sequence including one or more fields corresponding to the above IE.

In some embodiments, the second information field may indicate one or more time resources or may not indicate a time resource by indicating the configurations in the time-domain resource table.

In some embodiments, the time resource index may include a time resource index corresponding to a time resource and/or a time resource index not corresponding to a time resource. For example, the time resource index is an index or sequence number configured by one column (row) in the time-domain resource table to which the second information field corresponds. If all configurations in the time-domain resource table include time resources, the time resource index includes only a time resource index corresponding to a time resource, and if there exist configurations that include time resources and configurations that do not include time resources in the time-domain resource table, the time resource index includes a time resource index corresponding to a time resource and a time resource index not corresponding to a time resource. For another example, all configurations in the time-domain resource table include time resources, if all values in the time resource index correspond to the configurations in the time-domain resource table, the time resource index includes only a time resource index corresponding to a time resource, and if a part of values in the time resource index correspond to the configurations in the time-domain resource table and another part of values do not correspond to any configuration in the time-domain resource table, the time resource index includes a time resource index corresponding to a time resource and a time resource index not corresponding to a time resource. The time resource index not corresponding to a time resource, for example, is predefined and/or is configured by higher-layer signaling.

In some embodiments, the time resources indicated by the second information field of the DCI are related to the first subcarrier spacing and/or the second subcarrier spacing.

In some embodiments, for the case where the DCI includes multiple second information fields or indicates multiple time resources (indicated by identical or different second information fields), different second information fields or time resources correspond to identical or different first subcarrier spacings and/or second subcarrier spacings. Different second information fields correspond to identical or different first subcarrier spacings and/or second subcarrier spacings, and time resources indicated by different second information fields correspond to identical or different first subcarrier spacings and/or second subcarrier spacings.

I. How to determine time resources based on the first subcarrier spacing and/or the second subcarrier spacing shall be described below.

In some embodiments, the time resources are related to the first subcarrier spacing and/or the second subcarrier spacing. Sizes of the first subcarrier spacing and the second subcarrier spacing are identical or different. In a case where the sizes are identical, being related to the first subcarrier spacing and the second subcarrier spacing is equivalent to being related to the first subcarrier spacing and/or the second subcarrier spacing.

In some embodiments, the time resources are at least related to the first subcarrier spacing, and are related to or not related to the second subcarrier spacing (i.e. it is not needed to be related to the second subcarrier spacing).

In some embodiments, the duration of the time-domain resources is related to the first subcarrier spacing, i.e. the first subcarrier spacing is at least used to determine the duration of the time resources. That is, the duration of time resources is based on the first subcarrier spacing. For example, the second information field in the DCI indicates that the duration of the time resources determined by the configuration in the time-domain resource table is L, that is, the time resources include a first number (L) of time units (slots and/or symbols) with the first subcarrier spacing.

In some embodiments, a starting position of the time resources is related to the first subcarrier spacing and/or the second subcarrier spacing. The starting position includes a starting slot and/or a starting symbol, or, in other words, the first subcarrier spacing and/or the second subcarrier spacing is/are used to determine the starting position. For example, the first subcarrier spacing and the second subcarrier spacing are used to determine a starting slot of the time resources (the starting slot of the time resources is a slot where a first one of symbols of the time resources is located), and the first subcarrier spacing is used to determine the starting symbol of the time resources. For another example, the starting slot and starting symbol of the time resources are determined only based on the first subcarrier spacing; however, the embodiments of this disclosure are not limited thereto.

How to determine the time resources based on the first subcarrier spacing and the second subcarrier spacing shall be exemplified below.

In some embodiments, the starting slot of the time resources (a slot where they are located) is a slot with an index p+X (i.e. slot p+X); where, $p = \left\lfloor q \cdot \frac{2^{\mu_{resource}}}{2^{\mu_{PDCCH}}} \right\rfloor$, slot q is a slot of DCI (PDCCH) (carrying the second beam indication information) (or, in other words, a slot where DCI or PDCCH (carrying the second beam indication information) is located, and slot q is based on the second subcarrier spacing), $\mu_{resource}$ is the first subcarrier spacing, $\mu_{PDCCH}$ is the second subcarrier spacing, and slot p is a slot of the first subcarrier spacing overlapping with slot q in the time domain (the first subcarrier spacing is less than or equal to the second subcarrier spacing) or a first one of slots of the first subcarrier spacing (the first subcarrier spacing is greater than or equal to or less than the second subcarrier spacing). The slot offset X is related to the first subcarrier spacing (e.g. the slot offset X includes X slots of the first subcarrier spacing); where, $X=K_3$ (the time offset of the time resources determined by the configuration in the time-domain resource table indicated by the second information field in the DCI is $K_3$) or, $X = K_3 + K_{3,offset} \cdot \frac{2^{\mu_{resource}}}{2^{\mu_{K_{3,offset}}}}$, or, $X = K_3 + \left\lfloor \frac{N_{slot,offset,PDCCH}^{CA}}{2^{\mu_{offset\_PDCCH}}} - \frac{N_{slot,offset,resource}^{CA}}{2^{\mu_{offset\_resource}}} \right\rfloor$, $K_3$ is based on the first subcarrier spacing, $K_{3,offset}$ is predefined or indicated (equal to or not equal to 0 (greater than 0 or less than 0)), which is equal to or not equal to $K_{offset}$ defined in 4.2 of TS38.213. $\mu_{K_{3,offset}}$ is a subcarrier spacing of $K_{3,offset}$, $N_{slot}^{CA}$, offset, PDCCH and $\mu_{offset,PDCCH}$ are $N_{slot,\,offset}^{CA}$ and $\mu_{offset}$, which are respectively determined by ca-SlotOffset configured by higher-layer signaling for a cell receiving the PDCCH, and $N_{slot,\,offset,\,resource}^{CA}$ and $\mu_{offset,resource}$ are $N_{slot,\,offset}^{CA}$, and $\mu_{offset}$, which are determined by ca-SlotOffset configured by the higher-layer signaling for a forwarded cell and/or a cell where the time resources are located.

In some embodiments, $p = \left\lfloor q \cdot \frac{2^{\mu_{resource}}}{2^{\mu_{PDCCH}}} \right\rfloor$ refers to that the slot p is the slot of the first subcarrier spacing overlapping with slot q in the time domain (the first subcarrier spacing is less than or equal to the second subcarrier spacing) or the first one of slots of the first subcarrier spacing (the first subcarrier spacing is greater than or equal to or less than the second subcarrier spacing); however, this disclosure is not limited thereto, for example, the slot may also be a last slot or an only one slot.

In addition, in the embodiments of this disclosure, description is given by taking that the slot q has a DCI (PDCCH) (carrying the second beam indication information slot) (or, in other words, the slot where the DCI or PDCCH (carrying the second beam indication information) is located). However, the embodiments of this disclosure are not limited thereto, and the slot q may also be a slot where a PUCCH/PUSCH carrying HARQ feedback for the DCI or PDCCH carrying the second beam indication information is/are located (in this case, the second subcarrier spacing is a subcarrier spacing used by the PUCCH/PUSCH).

In some embodiments, the starting symbol of the time resources (obtained based on the symbol offset Y) is determined according to a boundary/a first one of symbols of a starting slot based on the first subcarrier spacing. That is, relative to the boundary/first one of symbols of the starting slot based on the first subcarrier spacing, the symbol offset Y may correspond to the symbol offset S configured in the time-domain resource table, or may be greater than the symbol offset S (other offsets may possibly be superposed on the basis of the symbol offset S); however, it is not limited thereto.

For example, the starting slot of the time resources is a position of a slot with an offset of X slots of the first SCS from the slot p based on the first subcarrier spacing, the starting symbol of the time resources is a position of a symbol with an offset of Y symbols of the first subcarrier spacing from the starting slot, and the slot q is based on the second subcarrier spacing, which shall be explained below with reference to FIGs. 3A-3E.

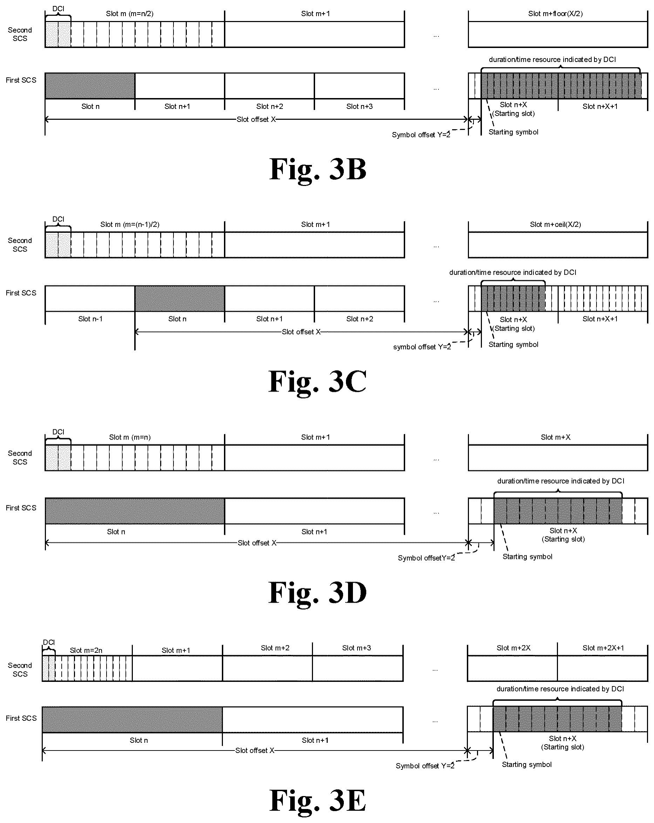

As shown in FIG. 3A, slot p (n) is a first one of slots of the first subcarrier spacing overlapping with slot q (m) in the time domain, and the first subcarrier spacing is greater than the second subcarrier spacing. Slot n+X based on the first subcarrier spacing is the starting slot, and a *(Y+1)-th* symbol in slot n+X based on the first subcarrier spacing is the starting symbol (with an offset of Y symbols from the first one of symbols). The time resource is located within one slot, and its duration is based on the first subcarrier spacing (10 symbols of the first subcarrier spacing are included in the figure). As shown in FIG. 3B, a difference from FIG. 3A is that the time resource is cross slots (the duration of the time resource includes 25 symbols of the first subcarrier spacing).

As shown in FIG. 3C, slot p (n) is a last one of slots of the first subcarrier spacing overlapping with slot q (m) in the time domain, and the first subcarrier spacing is greater than the second subcarrier spacing. Slot n+X based on the first subcarrier spacing is the starting slot, and a *(Y+1)-th* symbol in slot n+X based on the first subcarrier spacing is the starting symbol. The time resource is located in one slot, and the duration of the time resource is based on the first subcarrier spacing (the duration of the time resource includes 10 symbols of the first subcarrier spacing).

As shown in FIG. 3D, slot p (n) is an only one slot of the first subcarrier spacing overlapping with slot q (m) in the time domain, and the first subcarrier spacing is equal to the second subcarrier spacing. Slot n+X based on the first subcarrier spacing is the starting slot, and a *(Y+1)-th* symbol in slot n+X based on the first subcarrier spacing is the starting symbol. The time resource is located in a slot, and the duration of the time resource is based on the first subcarrier spacing (the duration of the time resource includes 10 symbols of the first subcarrier spacing).

As shown in FIG. 3E, slot p (n) is an only one slot (a first and also a last one) of the first subcarrier spacing overlapping with slot q (m) in the time domain, and the first subcarrier spacing is less than the second subcarrier spacing. Slot n+X based on the first subcarrier spacing is the starting slot, and a *(Y+1)-th* symbol in slot n+X based on the first subcarrier spacing is the starting symbol. The time resource is located in one slot, and the duration of the time resource is based on the first subcarrier spacing (the duration of the time resource includes 10 symbols of the first subcarrier spacing).

The above description is given by taking that slot p is a slot of the first subcarrier spacing overlapping with slot q in the time domain as an example. Slot p may also be a slot of (a first one or last one or only one) the first subcarrier spacing overlapping with symbol z. Symbol z is a symbol where the DCI/PDCCH carrying the second beam indication information is/are located, or symbol z is a symbol where HARQ feedback for the DCI or PDCCH carrying the second beam indication information is located. Following description shall be given by taking that symbol z is a symbol where the DCI/PDCCH carrying the second beam indication information is/are located as an example.

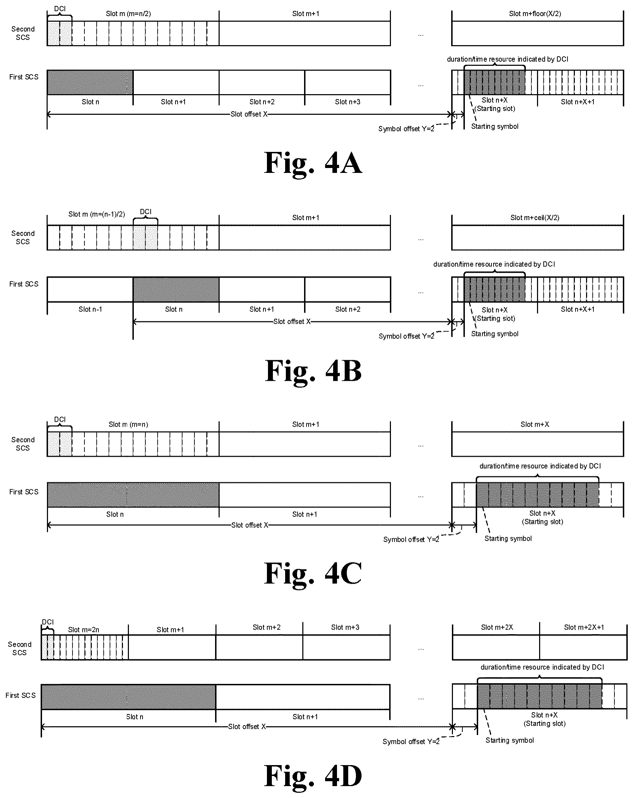

For example, the starting slot of the time resources is a position of a slot with an offset of X slots of the first SCS from the slot p based on the first subcarrier spacing, the starting symbol of the time resource is a position of a symbol with an offset of Y symbols based on the first subcarrier spacing from the boundary/first one of symbols of the starting slot, and the symbol z is based on the second subcarrier spacing, which shall be described below with reference to FIGs. 4A-4D.

As shown in FIG. 4A, slot p (n) is a first one of slots of the first subcarrier spacing overlapping with symbol z in the time domain, and the first subcarrier spacing is greater than the second subcarrier spacing. Slot n+X based on the first subcarrier spacing is the starting slot, and a *(Y+1)-th* symbol based on the first subcarrier spacing in slot n+X is the starting symbol. The time resource is located within one slot, and its duration is based on the first subcarrier spacing (the duration of the time resource includes 10 symbols of the first subcarrier spacing).

As shown in FIG. 4B, slot p (n) is a first one (also a last one and only one) of slots of the first subcarrier spacing overlapping with symbol z in the time domain, and the first subcarrier spacing is greater than the second subcarrier spacing. Slot n+X based on the first subcarrier spacing is the starting slot, and a *(Y+1)-th* symbol based on the first subcarrier spacing in slot n+X is the starting symbol. The time resource is located in one slot, and the duration of the time resource is based on the first subcarrier spacing (the duration of the time resource includes 10 symbols of the first subcarrier spacing).

As shown in FIG. 4C, slot p (n) is an only one slot of the first subcarrier spacing overlapping with symbol z in the time domain, and the first subcarrier spacing is equal to the second subcarrier spacing. Slot n+X based on the first subcarrier spacing is the starting slot, and a *(Y+1)-th* symbol based on the first subcarrier spacing in slot n+X is the starting symbol. The time resource is located in one slot, and the duration of the time resource is based on the first subcarrier spacing (the duration of the time resource includes 10 symbols of the first subcarrier spacing).

As shown in FIG. 4D, slot p (n) is an only one slot (a first and also a last one) of the first subcarrier spacing overlapping with symbol z in the time domain, and the first subcarrier spacing is less than the second subcarrier spacing. Slot n+X based on the first subcarrier spacing is the starting slot, and a *(Y+1)-th* symbol based on the first subcarrier spacing in slot n+X is the starting symbol. The time resource is located in one slot, and the duration of the time resource is based on the first subcarrier spacing (the duration of the time resource includes 10 symbols of the first subcarrier spacing).

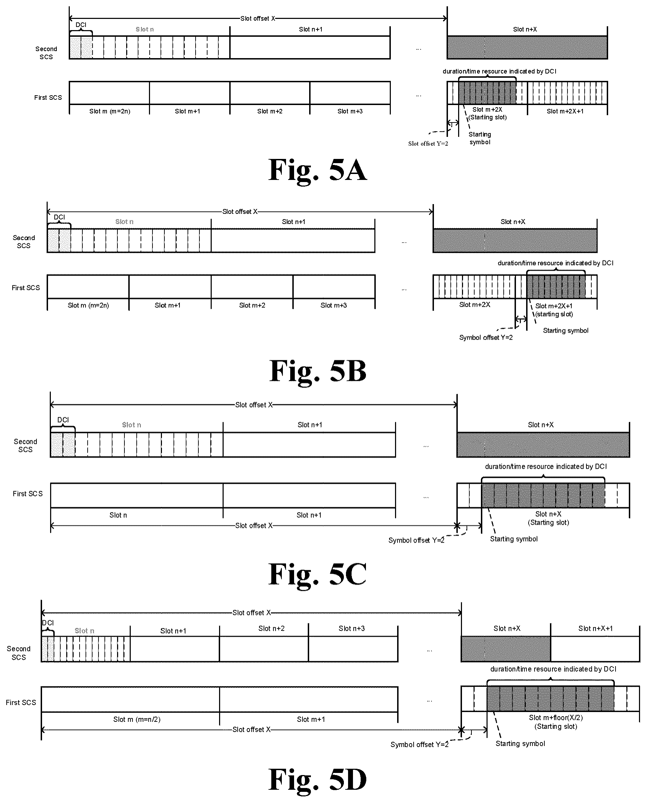

The above description is given by taking that slot offset X is based on the first subcarrier spacing as an example. Slot offset X may also be based on the second subcarrier spacing, the starting slot of the time resource corresponds to/overlaps with/is associated with a first slot, which is a slot with an index q+X (slot q+X), wherein the slot offset X is related to the second subcarrier spacing (for example, slot offset X includes X slots of the second subcarrier spacing), and a meaning of slot q remains unchanged. For example, the starting slot of the time resource is a slot (for example, only one or first one or last one (assumed as the first one in the following figures) based on the first subcarrier spacing overlapping with slot q+X, which shall be described below with reference to FIGs. 5A-5E. $X$ is equal to or greater than $K_3$ (other offsets may possibly be superposed on the basis of the slot offset $K_3$); however, it is not limited thereto.

As shown in FIG. 5A, the first slot q (n)+X is a position with an offset of X slots based on the second subcarrier spacing from slot q (n), and the first subcarrier spacing is greater than the second subcarrier spacing. The first one of slots (slot m+2X) based on the first subcarrier spacing overlapping with the first slot n+x is the starting slot, and a *(Y+1)-th* symbol based on the first subcarrier spacing in slot m+2X is the starting symbol. The time resource is located in one slot, and its duration is based on the first subcarrier spacing (the duration of the time resource includes 10 symbols of the first subcarrier spacing). As shown in FIG. 5B, a difference from FIG. 5A is that a last one of slots (slot m+2X+1) based on the first subcarrier spacing overlapping with the first slot n+X is the starting slot, and a symbol Y (a *(Y+1)-th* symbol) based on the first subcarrier spacing in slot m+2X+1 is the starting symbol.

As shown in FIG. 5C, the first slot n+X is a position with an offset of X slots based on the second subcarrier spacing from slot q (n), and the first subcarrier spacing is greater than the second subcarrier spacing. A (only one) slot n+2 based on the first subcarrier spacing overlapping with the first slot n+X is the starting slot, and a *(Y+1)-th* symbol based on the first subcarrier spacing in slot n+X is the starting symbol. The time resource is located in one slot, and its duration is based on the first subcarrier spacing (the duration of the time resource includes 10 symbols of the first subcarrier spacing).

As shown in FIG. 5D, the first slot n+X is a position with an offset of X slots based on the second subcarrier spacing from slot q (n), and the first subcarrier spacing is less than the second subcarrier spacing. A (only one, also a first one and a last one) slot m+floor(X/2) based on the first subcarrier spacing overlapping with the first slot n+X is the starting slot, and a *(Y+1)-th* symbol based on the first subcarrier spacing in slot m+floor(X/2) is determined as the starting symbol. The time resource is located in one slot, and its duration is based on the first subcarrier spacing (the duration of the time resource includes 10 symbols of the first subcarrier spacing).

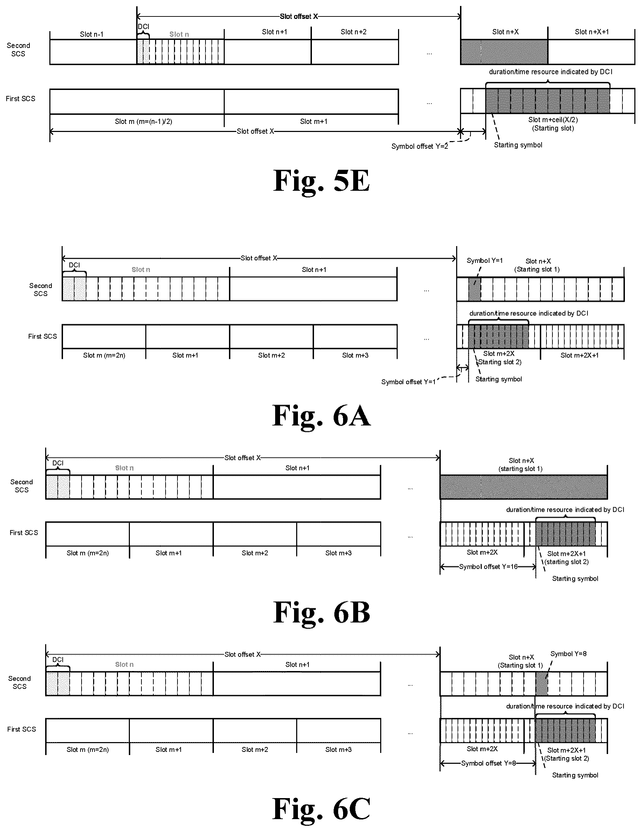

As shown in FIG. 5E, the first slot n+X is a position with an offset of X slots based on the second subcarrier spacing from slot q (n), and the first subcarrier spacing is less than the second subcarrier spacing. A (only one, also a first one and a last one) slot m+ceil(X/2) based on the first subcarrier spacing overlapping with the first slot n+X is the starting slot, and a *(Y+1)-th* symbol based on the first subcarrier spacing in slot m+ ceil (X/2) is the starting symbol. The time resource indicated by the DCI is located in one slot, and its duration is based on the first subcarrier spacing (the duration of the time resource includes 10 symbols of the first subcarrier spacing).

In the above embodiment, that the starting symbol of the time resource (determined based on symbol offset Y) is determined according to the boundary/the first one of symbols of the starting slot based on the first subcarrier spacing. However, the embodiments of this disclosure are not limited thereto, and the offset Y of the starting symbol relative to the boundary or the starting symbol of the starting slot is related to the first subcarrier spacing and/or the second subcarrier spacing, which shall be described below with reference to FIGs. 6A-6G.

As shown in FIG. 6A, the slot offsets X and Y are both determined based on the second subcarrier spacing, the first subcarrier spacing is greater than the second subcarrier spacing, and the first slot is n+X based on the second subcarrier spacing, and is determined in the above method. The starting slot is m+2X based on the first subcarrier spacing. A symbol offset of the starting symbol in the first slot from a first one of symbols in the first slot is Y, the position of the starting symbol in slot m+2X is aligned with the position of the starting symbol in the first slot. The time resource is located in a slot, and the duration of the time resource is based on the first subcarrier spacing (the duration of the time resource includes 10 symbols of the first subcarrier spacing).

As shown in FIG. 6B, the slot offset X is determined based on the second subcarrier spacing, the first subcarrier spacing is greater than the second subcarrier spacing, and the first slot is n+X based on the second subcarrier spacing, and is determined in the above method. The starting slot is m+2X based on the first subcarrier spacing. A symbol offset Y is determined based on the first subcarrier spacing, and an offset of the starting symbol from the starting slot m+2X is determined as 16, hence, it is located in a slot m+2X+1, that is, the starting slot of the time resource is equivalent to m+2X+1, and the starting symbol is a third symbol in slot m+2X+1. The time resource is located in one slot, and the duration of the time resource is based on the first subcarrier spacing (the duration of the time resource includes 10 symbols of the first subcarrier spacing).

As shown in FIG. 6C, the slot offsets X and Y are both determined based on the second subcarrier spacing, the first subcarrier spacing is greater than the second subcarrier spacing, and the first slot is determined as n+X based on the second subcarrier spacing, and is determined in the above method. The starting slot is m+2x based on the first subcarrier spacing. The starting position of the time resource is aligned with a position of the first one of symbols of the first slot with an offset of Y symbols based on the second subcarrier spacing, that is, the starting slot of the time resource is equivalent to m+2X+1, and the starting symbol is a third symbol in slot m+2X+1. The time resource is located in one slot, and the duration of the time resource is based on the first subcarrier spacing (the duration of the time resource includes 10 symbols of the first subcarrier spacing).

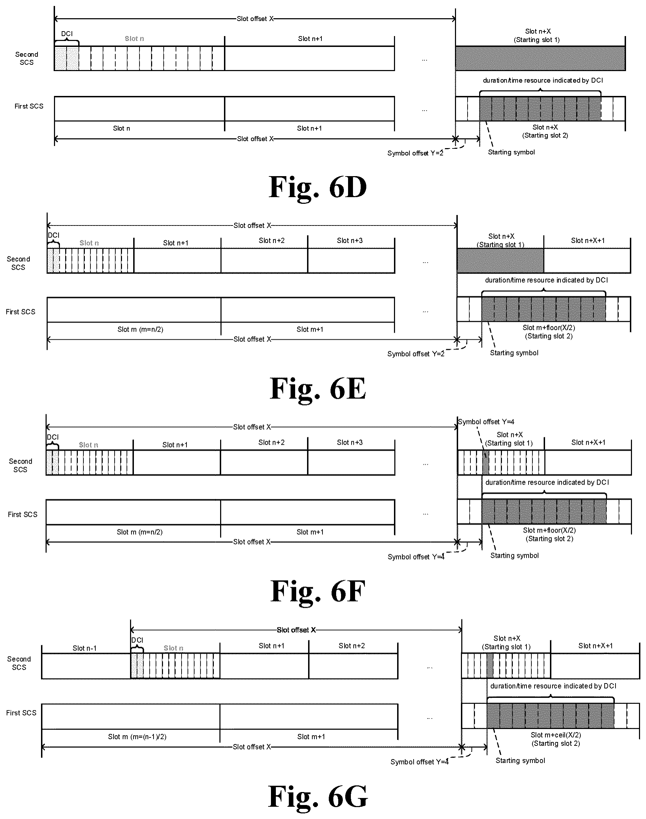

As shown in FIG. 6D, the first subcarrier spacing and the second subcarrier spacing are identical, and the first slot is n+X based on the second subcarrier spacing, and is determined in the above method. The starting slot is n+X based on the first subcarrier spacing, and the starting symbol in slot n+X is a *(Y+1)-th* symbol. The time resource is located in one slot, and the duration of the time resource is based on the first subcarrier spacing (the duration of the time resource includes 10 symbols of the first subcarrier spacing).

As shown in FIG. 6E, the slot offset X is determined based on the second subcarrier spacing, the first subcarrier spacing is less than the second subcarrier spacing, and the first slot is n+X based on the second subcarrier spacing, and is determined in the above method. The starting slot is m+floor(X/2) based on the first subcarrier spacing. A symbol offset Y is determined based on the first subcarrier spacing, and the starting symbol is a *(Y+1)-th* symbol in slot m+floor(X/2). The time resource is located in one slot, and the duration of the time resource is based on the first subcarrier spacing (the duration of the time resource includes 10 symbols of the first subcarrier spacing). As shown in FIG. 6F, a difference from FIG. 6E exists in that the symbol offset Y is determined based on the second subcarrier spacing.

As shown in FIG. 6G, the slot offsets X and Y are both determined based on the second subcarrier spacing, the first subcarrier spacing is less than the second subcarrier spacing, and the first slot is determined as n+X based on the second subcarrier spacing, and is determined in the above method. The starting slot is m+ceil(X/2) based on the first subcarrier spacing. An offset between the starting symbol in the first slot and the first one of symbols of the first slot is Y, and a position of the starting symbol in the slot m+ceil(X/2) is aligned with the position of the starting symbol in the first slot. The time resource is located in one slot, and the duration of the time resource is based on the first subcarrier spacing (the duration of the time resource includes 10 symbols of the first subcarrier spacing).

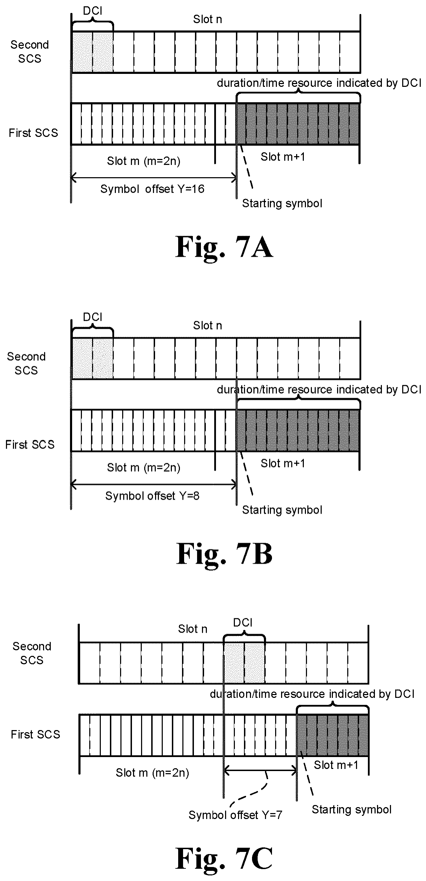

In the above embodiments, the symbol offset Y of the time resource is determined relative to the boundary or starting symbol of the starting slot; however, this disclosure is not limited thereto, and the symbol offset may also be determined relative to the starting symbol of DCI carrying the second beam indication information or the PDCCH or PDCCH MO carrying the DCI. In this case, for example, the slot offset may be 0, which shall be described below with reference to FIGs. 7A-7D, in which X=0 is taken as an example.

As shown in FIGs. 7A and 7C, the first subcarrier spacing is greater than the second subcarrier spacing, the symbol offset Y is based on the first subcarrier spacing, the starting symbol of the time resource is spaced apart from the starting symbol of the DCI by Y symbols based on the first subcarrier spacing. The time resource is located in one slot, and the duration of the time resource is based on the first subcarrier spacing (the duration of the time resource in FIG. 7A includes 12 symbols of the first subcarrier spacing, and the duration of the time resource in FIG. 7C includes 7 symbols of the first subcarrier spacing).

As shown in FIG. 7B, the first subcarrier spacing is greater than the second subcarrier spacing, the symbol offset Y is based on the second subcarrier spacing, the starting symbol of the time resource is aligned with a position spaced apart from the starting symbol of the DCI by Y symbols based on the second subcarrier spacing. The time resource is located in one slot, and the duration of the time resource is based on the first subcarrier spacing (the duration of the time resource includes 12 symbols of the first subcarrier spacing).

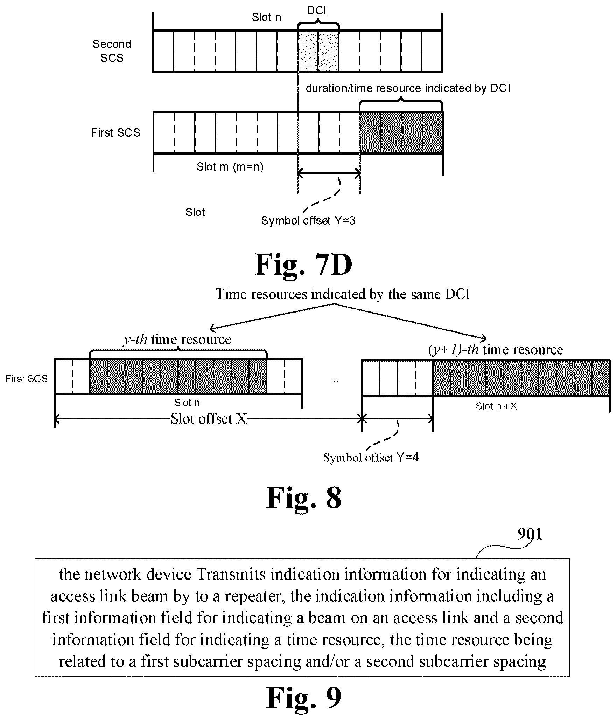

As shown in FIG. 7D, the first subcarrier spacing is equal to the second subcarrier spacing, the symbol offset Y is based on the first subcarrier spacing, the starting symbol of the time resource is spaced apart from the starting symbol of the DCI by Y symbols based on the first subcarrier spacing. The time resource is located in one slot, and the duration of the time resource is based on the first subcarrier spacing (the duration of the time resource includes 4 symbols of the first subcarrier spacing).

In the above embodiment, description is given by taking that the DCI indicates one time resource as an example. When the DCI indicates multiple time resources, each time resource is determined in one of the above methods, or only a part thereof (such as the time resource indicated by the first one of second information fields (multiple second information fields), or a first time resource indicated by the second information field (one second information field)) is determined in the above method, while other time resources are not determined in the above method.

For example, for other time resources, slot offsets and symbol offsets are based on the first subcarrier spacing, starting slots of the other time resources are spaced apart from a starting slot of a previous (e.g. determined) time resource by X slots based on the first subcarrier spacing, and starting symbols of the other time resources are spaced apart from a starting symbol of the starting slot of the other time resource by Y symbols based on the first subcarrier spacing.

FIG. 8 is a schematic diagram of determination of time resources of the embodiments of this disclosure. As shown in FIG. 8, for the *(y+1)-th* time resource, its starting slot is spaced apart from a starting slot of a *y-th* time resource by X slots based on the first subcarrier spacing, and a starting symbol of the *(y+1)-th* time resource in the starting slot n+X is spaced apart from a first one of symbols of the starting slot n+X by Y symbols based on the first subcarrier spacing; where, y is an integer greater than 0. The *y-th* time resource may be determined in the above method or may be determined in the same method as the *(y+1)-th* time resource.

II. How to determine/indicate the first subcarrier spacing and/or the second subcarrier spacing shall be described below

In some embodiments, the second subcarrier spacing is predefined, for example, the second subcarrier spacing is a subcarrier spacing of the DCI or PDCCH carrying the second beam indication information, or a subcarrier spacing of a downlink (active) BWP used to transmit the DCI or PDCCH carrying the second beam indication information, or a subcarrier spacing of a PUCCH/PUSCH used to transmit HARQ feedback (which may be hereinafter replaced with HARQ-ACK feedback) for the DCI or PDCCH carrying the second beam indication information, or a subcarrier spacing of uplink (active) BWP used to transmit a PUCCH/PUSCH of HARQ feedback for the DCI or PDCCH carrying the second beam indication information.

In some embodiments, the first subcarrier spacing is predefined.

Example 1: the first subcarrier spacing is predefined for the time resources indicated by the second beam indication information, wherein different first subcarrier spacings or identical first subcarrier spacings are defined for different frequency domain ranges or operating frequency bands. For example, a first subcarrier spacing $\mu1$ is defined for FR1, and a first subcarrier spacing $\mu2$ is defined for FR2, wherein $\mu1$ and $\mu2$ are identical or different.

Or, for the second beam indication information, the first subcarrier spacing is defined, or for different indicated time resources or different second information fields, different first subcarrier spacings are defined. In a case where the DCI includes multiple second information fields or indicates multiple time resources (indicated by identical or different second information fields), first subcarrier spacings defined for different second information fields or different time resources are identical or different. That is, one predefined first subcarrier spacing is applied to all time resources indicated by the DCI (the first subcarrier spacing is defined for the second beam indication information), or, different predefined first subcarrier spacings are applied to time resources indicated by different second information fields (for the case where the DCI includes multiple second information fields) or different time resources (when the DCI indicates multiple time resources (indicated by identical or different second information fields)) (different first subcarrier spacings are defined for different indicated time resources or different second information fields).

Example 2: a first subcarrier spacing related to a time resource indicated by the second beam indication information is identical to a first subcarrier spacing related to a time resource indicated by the first beam indication information, or, the first subcarrier spacing related to the time resource indicated by the second beam indication information is identical to one of first subcarrier spacings related to the time resources indicated by the first beam indication information. The one of first subcarrier spacings is, for example, a smallest subcarrier spacing or a largest subcarrier spacing therein, or a subcarrier spacing indicated by a first beam indication with a lowest/smallest (or a first one) index (or sequence number). The first subcarrier spacing related to the time resource indicated by the first beam indication information may be indicated by the above third information field or is predefined. For example, the network device transmits multiple first beam indication information to the NCR, each of which including an information field indicating subcarrier spacings, and the first subcarrier spacing being a smallest subcarrier spacing or a largest subcarrier spacing therein. For example, each of the first beam indication information respectively includes an information field indicating a corresponding subcarrier spacing, and the first subcarrier spacing is a subcarrier spacing indicated by a first beam indication with a lowest/smallest (or a first one) index (or sequence number); however, the embodiments of this disclosure are not limited thereto. That is, first subcarrier spacings of one or more time resources indicated by the second information field (or the DCI) are identical to a subcarrier spacing configured for the first beam indication, or are identical to one of subcarrier spacings configured for one or more first beam indications respectively, wherein one of the subcarrier spacings is, for example, a smallest or largest subcarrier spacing therein or a subcarrier spacing indicated by the first beam indication with a lowest/smallest (or a first one) index (or sequence number).

Example 3: when the RRC signaling provides one or more first beam indications, the first subcarrier spacing is predefined in the manner in Example 2, and when the RRC signaling does not provide one or more first beam indications, the first subcarrier spacing is predefined in the manner in Example 1.

Example 4: the first subcarrier spacing is predefined as a reference subcarrier spacing of TDD configuration, or a subcarrier spacing of the DCI or PDCCH carrying the second beam indication information, or a subcarrier spacing of a downlink BWP transmitting the DCI or PDCCH carrying the second beam indication information, or a maximum or minimum value of subcarrier spacings of configured downlink BWPs or active downlink BWPs, or a subcarrier spacing of a PUCCH/PUSCH transmitting HARQ feedback for the DCI or PDCCH carrying the second beam indication information, or a subcarrier spacing of an uplink BWP of a PUCCH/PUSCH transmitting HARQ feedback for the DCI or PDCCH carrying the second beam indication information, or a maximum or minimum value of subcarrier spacings of configured uplink BWPs or active uplink BWPs, or a maximum or minimum value of subcarrier spacings of SSBs, or a maximum or minimum value of subcarrier spacings of PRACHs, or a maximum or minimum value of subcarrier spacings of downlink and/or uplink carriers.

Example 5: the first subcarrier spacing is predefined as a maximum value or a minimum value of the subcarrier spacings in Example 1 to Example 4.

In some embodiments, the first subcarrier spacing is indicated (configured).

In some embodiments, the first subcarrier spacing is indicated by subcarrier spacing indication information carried by the RRC signaling. The subcarrier spacing indication information includes one or more fourth information fields (higher-layer parameters), the one or more fourth information fields being used for indicating the first subcarrier spacing related to the time resources indicated by the second beam indication information, or being used to indicate the first subcarrier spacing related to the configuration in the time-domain resource table to which the second beam indication information corresponds.

For example, a fourth information field A (higher-layer parameter 1) is used to configure a first subcarrier spacing of the (one or more) time resources indicated by the DCI (including one or more second information fields), the configured first subcarrier spacing being, for example, applied to all time resources indicated by the DCI.

For example, a fourth information field B is used to configure a first subcarrier spacing of the time resource indicated by one second information field in the DCI, the configured first subcarrier spacing being, for example, applied to all time resources indicated by the one second information field, and different second information fields respectively correspond to different fourth information fields (higher-layer parameter 2) used to configure a first subcarrier spacing.

For example, a fourth information field C is used to configure first subcarrier spacings related to all configurations in the time-domain resource table (corresponding to) of the DCI (or the second information field). For example, the configured first subcarrier spacings are applied to all the configurations or all time resources in the time-domain resource table. For example, the time-domain resource table may include a higher-layer parameter 3 for configuring the first subcarrier spacings. When the DCI/second information field indicates any configuration in the time-domain resource table, the NCR determines the time resource indicated by the DCI/second information field by using/based on the first subcarrier spacing related to the configurations in the time-domain resource table.

For example, a fourth information field D is used to configure a first subcarrier spacing related to one configuration in the time-domain resource table. For example, the configured first subcarrier spacing is applied to the one configuration or all time resources of the one configuration. For example, different configurations in the time-domain resource table respectively correspond to/include a higher-layer parameter 4 for configuring the subcarrier spacing. That is, when the DCI/second information field indicates one configuration in the time-domain resource table, the NCR determines the time resource indicated by the DCI/second information field by using/based on the configured first subcarrier spacing.

The above fourth information fields are optional (or optionally present) or conditionally optionally present or conditionally mandatory. For example, in a case where it is configured that the NCR-MT monitors the DCI and/or there exists no first beam indication and/or the DCI does not include a sixth information field, the fourth information fields are optionally present; otherwise, they are not present. For another example, in a case where it is configured that the NCR-MT monitors the DCI and/or there exists no first beam indication and/or the DCI does not include a sixth information field, the fourth information fields are mandatory/necessarily present; otherwise, they are not present.

In some cases, one higher-layer parameter may rewrite/overwrite another higher-layer parameter. For example, the higher-layer parameter 3 or 4 used to configure the first subcarrier spacing in the time-domain resource table may rewrite/overwrite the higher-layer parameter 1 or 2 used to configure the first subcarrier spacing of the time resource indicated by the DCI (or one or more second information fields in the DCI), or vice versa. For another example, the higher-layer parameter 4 configured in the time-domain resource table for configuring the first subcarrier spacing may rewrite/overwrite the higher-layer parameter 3 configured in the time-domain resource table for configuring the first subcarrier spacing (for a configuration where there exists a higher-layer parameter 4 for configuring the first subcarrier spacing, the higher-layer parameter 4 is applied to configure the first subcarrier spacing, and for a configuration where there exists no higher-layer parameter 4 for configuring the first subcarrier spacing, the higher-layer parameter 3 in the time-domain resource table used for configuring first subcarrier spacings is applied to configure the first subcarrier spacing).

That is, when higher-layer parameters 3 and 4 are received simultaneously, higher-layer parameter 4 may rewrite/overwrite higher-layer parameter 3, namely, the first subcarrier spacing indicated by higher-layer parameter 4 shall prevail, and the first subcarrier spacing indicated by higher-layer parameter 3 is ignored. Or, when higher-layer parameters 1 and 3 are received simultaneously, higher-layer parameter 3 may rewrite/overwrite higher-layer parameter 1, namely, the first subcarrier spacing indicated by higher-layer parameter 3 shall prevail, and the first subcarrier spacing indicated by higher-layer parameter 1 is ignored, which shall not be enumerated herein any further.

In some embodiments, the first subcarrier spacing is indicated by the fifth information field carried by the MAC CE. For example, a new MAC CE is introduced, which includes a fifth information field used to indicate the first subcarrier spacing of the time resource indicated by the DCI (second beam indication information).

In some embodiments, the first subcarrier spacing is indicated by one or more sixth information fields carried by the DCI, for example, the above first DCI format may further include a sixth information field for indicating the first subcarrier spacing. When there is one sixth information field, the first subcarrier spacing indicated by the sixth information field is applied to all time resources indicated by one or more second information fields, and when there are multiple sixth information fields, first subcarrier spacings indicated by different sixth information fields are applied to different time resources indicated by one or more second information fields.

In some embodiments, whether the second beam indication information (DCI) includes sixth information fields and/or the number of sixth information fields and/or bitwidths of sixth information fields may be predefined and/or may be configured by a higher-layer parameter.

For example, whether the DCI includes sixth information fields may be predefined, for example, it is predefined that the first DCI format includes sixth information fields, or it is predefined that the first DCI format does not include sixth information fields.

For example, whether the DCI includes sixth information fields is configured or indicated by a higher-layer parameter. For example, a new higher-layer parameter 5 is introduced, which is used to configure that the first DCI format includes sixth information fields. When higher-layer parameter 5 is provided, the DCI includes sixth information fields, and when higher-layer parameter 5 is not provided, the DCI does not include sixth information fields.

For example, whether the DCI includes sixth information fields is configured or indicated by a higher-layer parameter. In a case where the higher-layer signaling does not configure/indicate (such as when higher-layer parameter 5 is not provided), whether the first DCI format includes sixth information fields may be predefined, and in a case where the higher-layer signaling configures/indicates (such as when higher-layer parameter 5 is provided), whether the first DCI format includes sixth information fields is configured/indicated by the higher-layer signaling.

For example, the number of sixth information fields may be predefined, and it is predefined that the first DCI format includes carrying $N_{6,field}$ sixth information fields; where, $N_{6,fields} \geq 1$. For another example, it is provided in a protocol that the number of sixth information fields is identical to the number of the second information fields. If the number of the second information fields is configured/indicated by higher-layer signaling, the number of sixth information fields may also be determined. For a further example, the number of sixth information fields is related to the number of time resources that the second information field is able to indicate. For example, the number of sixth information fields is equal to a maximum number of time resources that the second information field is able to indicate, wherein the maximum number is a maximum number 1 of time resources that the configurations in the time-domain resource table to which the second information field corresponds are able to configure or a maximum number 2 of time resources included in the configurations in the time-domain resource table to which the second information field corresponds. For example, the maximum number of time resources that the configurations in the time-domain resource table are able to configure is 4. The time-domain resource table includes 2 configurations, one of which includes 2 time resources, and the other includes 1 time resource, that is, the maximum number of time resources included in the configurations in the time-domain resource table is 2, if the above maximum number is 1, the number of sixth information fields is 4, and if the maximum number is 2, the number of sixth information fields is 2.

For example, the number of sixth information fields is configured or indicated by higher-layer signaling. For example, a new higher-layer parameter 6 is introduced, which is used to configure the number $N_{6,fields}$ of sixth information fields in the first DCI format. For example, $N_{6,field} \in \{1, 2 \dots, N_{6,fields}^{max}\}$ (however, it is not limited thereto, and may also be defined as a set of discontinuous integers greater than 0), and $N_{6,fields}^{max}$ is predefined and/or is configured/indicated by higher-layer signaling, and represents the maximum number of sixth information fields that the DCI of the first DCI format is able to be configured (or is able to include).

For example, the number of sixth information fields is predefined and is configured or indicated by higher-layer signaling. In a case where the higher-layer signaling does not configure/indicate (such as when higher-layer parameter 6 is not provided), the number of sixth information fields in the first DCI format is predefined (that is, a default number is provided in a protocol, the default number being applied to the case where the higher-layer signaling does not configure the number of sixth information fields). In a case where the higher-layer signaling configures/indicates (such as when higher-layer parameter 6 is provided), the number of sixth information fields in the first DCI format is configured/indicated by the higher-layer signaling.

For example, bitwidth of the sixth information field is the number of bits included in the sixth information field. Bitwidths of different sixth information fields are identical or different, and may be predefined. A bitwidth $L_{6,bitwidth}$ of a sixth information field defined in the protocol is a predetermined value (an integer greater than 0, such as 1, 2, 3, 4), and values of $L_{6,bitwidth}$ may be defined as being identical or different for different frequency domain ranges or operating frequency bands. For example, for FR1, the value is 1 or 2, and for FR2, the value is 3 or 4. The defined values of $L_{6,bitwidth}$ for different sixth information fields are identical or different.

For example, if the bitwidth is configured or indicated by higher-layer signaling, one or more new higher-layer parameters 7 may be introduced, which is used to configure the bitwidths $L_{6,bitwidth}$ of the sixth information fields. For example, $L_{6,bitwidth} \in \{1, 2 \dots, L_{6,bitwidth}^{max}\}$ (however, it is not limited thereto, and may also be defined as a set of discontinuous integers greater than 0), and $L_{6,bitwidth}^{max}$ is predefined, and represents the maximum number of bitwidths that the sixth information fields are able to be configured. Values of $L_{6,bitwidth}^{max}$ for different frequency ranges or operating frequency bands may be predefined as being identical or different. For example, for FR1, $L_{6,bitwidth}^{max} \in \{1,2,3\}$, and for FR2, $L_{6,bitwi}^{ma} \in \{1,2,3,4,5,6\}$. Or, maximum values of $L_{6,bitwidth}$ that may be actually configured may be different. For example, $L_{6,bitwidth}^{max} = 6$, for FR1, the maximum value of $L_{6,bitwidth}$ that may be actually configured is 3, and for FR2, the maximum value of $L_{6,bitwidth}$ that may be actually configured is 6. For different sixth information fields, values of the configured $L_{6,bitwidth}$ are identical or different. For example, the one above higher-layer parameter 7 is introduced, and the configured bitwidth is applied to all sixth information fields in the first DCI format. Or, multiple higher-layer parameters 7 are introduced, which are respectively used to configure bitwidths of different sixth information fields.

For example, the bitwidth is predefined and is configured or indicated by higher-layer signaling. In a case where the higher-layer signaling does not configure/indicate (such as when higher-layer parameter 7 is not provided), the bitwidth of the sixth information field is predefined (that is, a default bitwidth is provided in a protocol, the default bitwidth being applied to the case where the higher-layer signaling does not configure the bitwidth of the sixth information field). In a case where the higher-layer signaling configures/indicates (such as when higher-layer parameter 7 is provided), the bitwidth of the sixth information field is configured/indicated by the higher-layer signaling.

In some embodiments, in the case where the DCI does not include sixth information fields, the first subcarrier spacing is predefined and/or is configured/indicated by higher-layer signaling (configured/indicated by the subcarrier spacing indication information and/or the fifth information field), and in the case where DCI includes sixth information fields, the first subcarrier spacing is indicated by the DCI (the sixth information field).

In some embodiments, the sixth information fields may rewrite/overwrite the configuration used to configure the above higher-layer parameters of the first subcarrier spacing. That is, when the sixth information fields and the subcarrier spacing indication information and/or the fifth information field are received simultaneously, the sixth information field may rewrite/overwrite the subcarrier spacing indication information and/or the fifth information field, namely, the first subcarrier spacing indicated by the sixth information field shall prevail, and the subcarrier spacing indication information and/or the first subcarrier spacing indicated by the fifth information field are ignored.

The above higher-layer parameters 1 to 7 may be carried in an RRC Reconfiguration message, an RRC Release message, and/or a first RRC message and/or other RRC signaling, and the embodiments of this disclosure are not limited thereto.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, the time resource to which the access link beam corresponds is related to the first subcarrier spacing and/or the second subcarrier spacing, hence, the corresponding time resource when the repeater performs forwarding is enabled to match with corresponding time resource for receiving or transmitting signals between the network device and the UE, thereby improving the effect of amplifying/enhancing signals, saving power consumption of the repeater, reducing interference to other devices in the network, and improving throughput of the network.

Embodiments of a second aspect

The embodiments of this disclosure provide an information transmitting method, which shall be described from a network device side, with contents identical to those in the embodiments of the first aspect being not going to be repeated any further.

FIG. 9 is a schematic diagram of the information transmitting method of the embodiments of this disclosure. As shown in FIG. 9, the method includes:

901: the network device transmits indication information for indicating an access link beam to a repeater, the indication information including a first information field for indicating a beam on an access link and a second information field for indicating a time resource, the time resource being related to a first subcarrier spacing and/or a second subcarrier spacing.

Reference may be made to the embodiments of the first aspect for relevant features of the indication information, the first information field, the second information field, the first subcarrier spacing, the second subcarrier spacing and the time resources, which shall not be repeated herein any further.

It should be noted that FIG. 9 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 9.

The steps or processes related to this disclosure are only described above; however, this disclosure is not limited thereto. The method of the embodiment of this disclosure may also include other steps or processes, and reference may be made to relevant techniques for specific contents of these steps or processes.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the embodiments of this disclosure, the time resource to which the access link beam corresponds is related to the first subcarrier spacing and/or the second subcarrier spacing, hence, the corresponding time resource when the repeater performs forwarding is enabled to match with corresponding time resource for receiving or transmitting signals between the network device and the UE, thereby improving the effect of amplifying/enhancing signals, saving power consumption of the repeater, reducing interference to other devices in the network, and improving throughput of the network.

Embodiments of a third aspect

The embodiments of this disclosure provide a repeater. The repeater may be, for example, the NCR as described above, or a network device or terminal equipment having a function of forwarding, or one or some components or assemblies configured in the NCR or the network device or the terminal equipment.

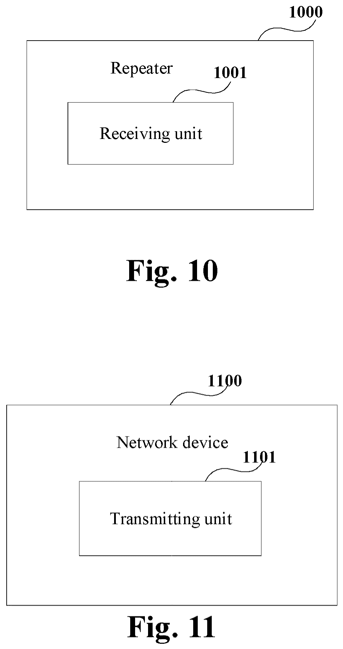

FIG. 10 is a schematic diagram of the repeater of the embodiments of this disclosure. As a principle of the repeater for solving problems is similar to that of the method in the embodiments of the first aspect, reference may be made to the implementation of the method described in the embodiments of the first aspect for implementation of the repeater, with identical contents being not going to be described herein any further.

As shown in FIG. 10, a repeater 1000 includes:
a receiving unit 1001 configured to receive indication information for indicating an access link beam, the indication information including a first information field for indicating a beam on an access link and a second information field for indicating a time resource, the time resource being related to a first subcarrier spacing and/or a second subcarrier spacing.

Reference may be made to the embodiment of the first aspect for relevant features of the indication information, the first information field, the second information field, the first subcarrier spacing, the second subcarrier spacing and the time resources, which shall not be repeated herein any further.

Furthermore, for the sake of simplicity, connection relationships between the components or modules or signal profiles thereof are only illustrated in FIG. 10. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the embodiments of this disclosure, the time resource to which the access link beam corresponds is related to the first subcarrier spacing and/or the second subcarrier spacing, hence, the corresponding time resource when the repeater performs forwarding is enabled to match with corresponding time resource for receiving or transmitting signals between the network device and the UE, thereby improving the effect of amplifying/enhancing signals, saving power consumption of the repeater, reducing interference to other devices in the network, and improving throughput of the network.

Embodiments of a fourth aspect

The embodiments of this disclosure provide a network device.

FIG. 11 is a schematic diagram of the network device of the embodiments of this disclosure. As a principle of the network device for solving problems is similar to that of the method in the embodiments of the second aspect, reference may be made to the implementation of the method described in the embodiments of the second aspect for implementation of the network device, with identical or related contents being not going to be described herein any further.

As shown in FIG. 11, a network device 1100 of the embodiments of this disclosure includes:
a transmitting unit 1101 configured to transmit indication information for indicating an access link beam to a repeater, the indication information including a first information field for indicating a beam on an access link and a second information field for indicating a time resource, the time resource being related to a first subcarrier spacing and/or a second subcarrier spacing.

Reference may be made to the embodiment of the first aspect for relevant features of the indication information, the first information field, the second information field, the first subcarrier spacing, the second subcarrier spacing and the time resources, which shall not be repeated herein any further.

It should be noted that the components or modules related to this disclosure are only described above. However, this disclosure is not limited thereto, and the network device 1100 of the embodiments of this disclosure may further include other components or modules, and reference may be made to related techniques for particulars of these components or modules.

Furthermore, for the sake of simplicity, connection relationships between the components or modules or signal profiles thereof are only illustrated in FIG. 11. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiment of this disclosure, the time resource to which the access link beam corresponds is related to the first subcarrier spacing and/or the second subcarrier spacing, hence, the corresponding time resource when the repeater performs forwarding is enabled to match with corresponding time resource for receiving or transmitting signals between the network device and the UE, thereby improving the effect of amplifying/enhancing signals, saving power consumption of the repeater, reducing interference to other devices in the network, and improving throughput of the network.

Embodiments of a fifth aspect

The embodiments of this disclosure provide a communication system. FIG. 1 is a schematic diagram of the communication system of the embodiments of this disclosure. As shown in FIG. 1, the communication system includes a network device 101, a repeater 102 and a terminal equipment 103. For the sake of simplicity, description is given in FIG. 1 by taking one network device, one repeater and two terminal equipments only as an example; however, the embodiment of this disclosure is not limited thereto.

In the embodiments of this disclosure, existing traffics or traffics that may be implemented in the future may be performed between the network device 101 and the terminal equipment 103. For example, such traffics may include but not limited to enhanced mobile broadband (eMBB), massive machine type communication (mMTC), ultra-reliable and low-latency communication (URLLC), and vehicle to everything (V2X) communication, etc. The repeater 102 is configured to execute the information receiving method in the embodiment of the first aspect, and the network device 101 is configured to execute the information transmitting method in the embodiment of the second aspect, contents of which being incorporated herein, which shall not be repeated herein any further.

The embodiments of this disclosure further provide an electronic device, which may be, for example, a repeater or a network device.

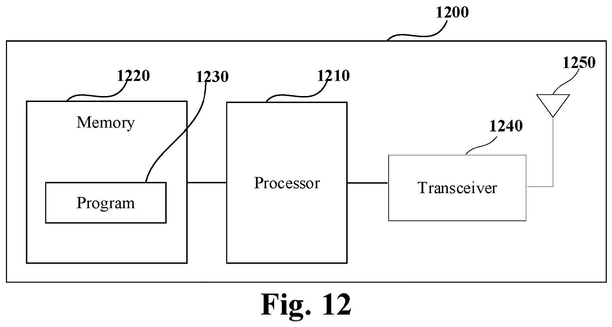

FIG. 12 is a schematic diagram of a structure of the electronic device of the embodiments of this disclosure. As shown in FIG. 12, an electronic device 1200 may include a processor 1210 (such as a central processing unit (CPU)) and a memory 1220, the memory 1220 being coupled to the processor 1210. The memory 1220 may store various data, and furthermore, it may store a program 1230 for information processing, and execute the program 1230 under control of the processor 1210.

For example, the processor 1210 may be configured to execute a program to execute the information transmitting method described in the embodiments of the second aspect.

For another example, the processor 1210 may be configured to execute a program to execute the information receiving method described in the embodiments of the second aspect.

Furthermore, as shown in FIG. 12, the electronic device 1200 may include a transceiver 1240, and an antenna 1250, etc. Functions of the above components are similar to those in the related art, and shall not be described herein any further. It should be noted that the electronic device 1200 does not necessarily include all the parts shown in FIG. 12, and furthermore, the electronic device 1200 may include parts not shown in FIG. 12, and the related art may be referred to.

Embodiments of this disclosure provide a computer readable program, which, when executed in a network device, will cause a computer to carry out the information transmitting method described in the embodiments of the second aspect in the network device.

Embodiments of this disclosure provide a computer medium, including a computer readable program, which will cause a computer to carry out the information transmitting method described in the embodiments of the second aspect in the network device.

Embodiments of this disclosure provide a computer readable program, which, when executed in a repeater, will cause a computer to carry out the information receiving method described in the embodiments of the first aspect in the repeater.

Embodiments of this disclosure provide a compute medium, including a computer readable program, which will cause a computer to carry out the information receiving method described in the embodiments of the first aspect in the repeater.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.

1. An information receiving method, applicable to a repeater, characterized in that the method includes:
receiving by the repeater indication information for indicating an access link beam, the indication information including a first information field for indicating a beam on an access link and a second information field for indicating a time resource, the time resource being related to a first subcarrier spacing and/or a second subcarrier spacing.

2. The method according to supplement 1, wherein the indication information includes first beam indication information and/or second beam indication information.

3. The method according to supplement 2, wherein the first beam indication information is periodic access link beam indication information, and/or is carried by RRC signaling.

4. The method according to supplement 3, wherein the first beam indication information includes a third information field for indicating a first subcarrier spacing, an indicated first subcarrier spacing being used for all time resources indicated by the first beam indication information.

5. The method according to supplement 2, wherein the second beam indication information is aperiodic access link beam indication information, and/or is carried by DCI.

6. The method according to supplement 1, wherein a duration of the time resources is related to the first subcarrier spacing, and a starting position of the time resources is related to the first subcarrier spacing and/or the second subcarrier spacing.

7. The method according to supplement 6, wherein the starting position includes a starting slot and/or a starting symbol.

8. The method according to supplement 6, wherein that a duration of the time resources is related to the first subcarrier spacing includes that the time resources include a first number of time units of the first subcarrier spacing.

9. The method according to supplement 7 or 8, wherein a starting slot of the time resources is a slot with an index p+X (slot p+X), wherein a slot offset X is related to the first subcarrier spacing.

9y. The method according to supplement 9, wherein the slot p is based on the first subcarrier spacing.

9a. The method according to supplement 9, wherein the slot offset X is determined by a slot offset $K_3$ of time resource configuration indicated by the second information field.

9b. The method according to supplement 9a, wherein the slot offset X is equal to the slot offset $K_3$.

9c. The method according to supplement 7 or 8, wherein a starting slot of the time resources corresponds to a first slot, an index of the first slot being a slot of q+X (slot q+X), wherein the slot offset X is related to the second subcarrier spacing.

9d. The method according to supplement 9c, wherein the slot offset X is determined by the slot offset $K_3$ of the time resource configuration indicated by the second information field.

9e. The method according to supplement 9c, wherein the slot offset X is equal to the slot offset $K_3$.

9f. The method according to supplement 9c, wherein the slot q is a slot where DCI or a PDCCH carrying the second beam indication information is located.

9g. The method according to supplement 9f, wherein the slot q is based on the second subcarrier spacing.

9h. The method according to any one of supplements 7-9 or 9c, wherein an offset of the starting symbol of the time resource relative to a boundary or a starting symbol of the starting slot or a starting symbol of the DCI or the PDCCH or a PDCCH MO carrying the second beam indication information is related to the first subcarrier spacing and/or the second subcarrier spacing.

9i. The method according to any one of supplements 7-9 or 9c, wherein when the second beam indication information indicates a plurality of time resources, for one or more of the plurality of time resources, a starting slot of a time resource at a latter position is determined according to a slot of a time resource at a former position.

9z. The method according to supplement 9 or 9c, wherein the starting slot of the time resources is a slot where a first one of symbols of the time resources is located.

10. The method according to any one of supplements 1-9, wherein sizes of the first subcarrier spacing and the second subcarrier spacing are identical or different.

11. The method according to any one of supplements 4-10, wherein different indicated time resources or different second information fields correspond to identical or different first subcarrier spacings and/or second subcarrier spacings.

12. The method according to any one of supplements 4-11, wherein the second subcarrier spacing is predefined.

13. The method according to any one of supplements 4-12, wherein the second subcarrier spacing is a subcarrier spacing of DCI or a PDCCH carrying the second beam indication information,

or a subcarrier spacing of a downlink BWP for transmitting DCI or a PDCCH carrying the second beam indication information,
or a subcarrier spacing of a PUCCH/PUSCH for transmitting HARQ feedback for DCI or a PDCCH carrying the second beam indication information,
or a subcarrier spacing of an uplink BWP of a PUCCH/PUSCH for transmitting HARQ feedback for DCI or a PDCCH carrying the second beam indication information.

14. The method according to any one of supplements 4-11, wherein the first subcarrier spacing is predefined.

15. The method according to any one of supplements 4-14, wherein different or identical first subcarrier spacings are defined respectively for different frequency domain ranges or operating frequency bands.

16. The method according to any one of supplements 4-15, wherein the first subcarrier spacing is defined for the second beam indication information, or different first subcarrier spacings are defined for different indicated time resources or different second information fields.

17. The method according to supplement 14, wherein a first subcarrier spacing related to a time resource indicated by the second beam indication information is identical to a first subcarrier spacing related to a time resource indicated by the first beam indication information, or, a first subcarrier spacing related to a time resource indicated by the second beam indication information is identical to one of a plurality of first subcarrier spacings related to time resources indicated by the first beam indication information.

18. The method according to any one of supplements 14-17, wherein the first subcarrier spacing is a reference subcarrier spacing of TDD configuration, or a subcarrier spacing of the DCI or PDCCH carrying the second beam indication information, or a subcarrier spacing of a downlink BWP for transmitting the DCI or PDCCH carrying the second beam indication information, or a maximum value or minimum value of subcarrier spacings of configured downlink BWPs or active downlink BWPs, or a subcarrier spacing of a PUCCH/PUSCH for transmitting HARQ feedback for the DCI or PDCCH carrying the second beam indication information, or a subcarrier spacing of an uplink BWP of a PUCCH/PUSCH for transmitting HARQ feedback for the DCI or PDCCH carrying the second beam indication information, or a maximum value or a minimum value of subcarrier spacings of configured uplink BWPs or active uplink BWPs, or a maximum value or a minimum value of subcarrier spacings of SSBs, or a maximum value or a minimum value of subcarrier spacings of PRACHs, or a maximum value or a minimum value of subcarrier spacings of downlink and/or uplink carriers.

20. The method according to any one of supplements 1-11, wherein the first subcarrier spacing is indicated.

21. The method according to supplement 20, wherein the repeater receives subcarrier spacing indication information, the subcarrier spacing indication information including one or more fourth information fields for indicating the first subcarrier spacing related to a time resource indicated by the second beam indication information.

22. The method according to supplement 20, wherein the repeater further receives an MAC CE, the MAC CE including a fifth information field used to indicate the first subcarrier spacing.

23. The method according to supplement 20, wherein the second beam indication information includes one or more sixth information fields for indicating the first subcarrier spacing.

24. The method according to supplement 23, wherein whether the second beam indication information includes a sixth information field and/or the number of sixth information fields and/or bitwidth of sixth information field is predefined and/or indicated.

25. The method according to supplement 3, wherein the RRC signaling includes an RRC reconfiguration message, and/or an RRC release message, and/or a first RRC message, the first RRC message being an NCR-specific RRC message.

26. An information transmitting method, applicable to a network device, characterized in that the method includes: transmitting indication information for indicating an access link beam by the network device to a repeater, the indication information including a first information field for indicating a beam on an access link and a second information field for indicating a time resource, the time resource being related to a first subcarrier spacing and/or a second subcarrier spacing.

27. A repeater, including a memory and a processor, wherein the memory stores a computer program, and the processor is configured to execute the computer program to carry out the method as described in any one of supplements 1-25.

28. A network device, including a memory and a processor, wherein the memory stores a computer program, and the processor is configured to execute the computer program to carry out the method as described in supplement 26.

**Claims**

1. A repeater, **characterized in that** the repeater comprises:
   a receiving unit configured to receive indication information for indicating an access link beam, the indication information comprising a first information field for indicating a beam on an access link and a second information field for indicating a time resource, the time resource being related to a first subcarrier spacing and/or a second subcarrier spacing.

2. The repeater according to claim 1, wherein the indication information comprises second beam indication information, the second beam indication information being aperiodic access link beam indication information, and/or being carried by DCI.

3. The repeater according to claim 1, wherein a duration of the time resource is related to the first subcarrier spacing, and a starting position of the time resource is related to the first subcarrier spacing and/or the second subcarrier spacing.

4. The repeater according to claim 3, wherein the starting position comprises a starting slot and/or a starting symbol.

5. The repeater according to claim 3, wherein that a duration of the time resource is related to the first subcarrier spacing comprises that the time resource comprises a first number of time units of the first subcarrier spacing.

6. The repeater according to claim 3, wherein a starting slot of the time resource is a slot with an index p+X (slot p+X), wherein a slot offset X is related to the first subcarrier spacing, or the starting slot of the time resources corresponds to a first slot, an index of the first slot being a slot of q+X (slot q+X), wherein the slot offset X is related to the second subcarrier spacing.

7. The repeater according to claim 6, wherein the slot q is a slot where DCI or a PDCCH carrying a second beam indication information is located.

8. The repeater according to claim 6, wherein the slot p is based on the first subcarrier spacing, and/or the slot q is based on the second subcarrier spacing.

9. The repeater according to claim 6, wherein the slot offset X is determined by a slot offset $K_3$ of time resource configuration indicated by the second information field of a second beam indication information.

10. The repeater according to claim 9, wherein the slot offset X is equal to the slot offset $K_3$.

11. The repeater according to claim 2, wherein an offset of the starting symbol of the time resource is relative to a boundary or a starting symbol of the starting slot or a starting symbol of the DCI or the PDCCH or a PDCCH MO carrying the second beam indication information is related to the first subcarrier spacing and/or the second subcarrier spacing.

12. The repeater according to claim 2, wherein when the second beam indication information indicates a plurality of time resources, for one or more of the plurality of time resources, a starting slot of a time resource at a latter position is determined according to a slot of a time resource at a former position.

13. The repeater according to claim 6, wherein the starting slot of the time resource is a slot where a first one of symbols of the time resource is located.

14. The repeater according to claim 2, wherein the second subcarrier spacing is a subcarrier spacing of DCI or a PDCCH carrying the second beam indication information,

   or a subcarrier spacing of a downlink BWP for transmitting DCI or a PDCCH carrying the second beam indication information,
   or a subcarrier spacing of a PUCCH/PUSCH for transmitting HARQ feedback for DCI or a PDCCH carrying the second beam indication information,
   or a subcarrier spacing of an uplink BWP of a PUCCH/PUSCH for transmitting HARQ feedback for DCI or a PDCCH carrying the second beam indication information.

15. The repeater according to claim 1, wherein the first subcarrier spacing is predefined.

16. The repeater according to claim 15, wherein a first subcarrier spacing related to a time resource indicated by the second beam indication information is identical to a first subcarrier spacing related to a time resource indicated by the first beam indication information, or, a first subcarrier spacing related to the time resource indicated by the second beam indication information is identical to one of a plurality of first subcarrier spacings related to a time resource indicated by the first beam indication information.

17. The repeater according to claim 15, wherein the first subcarrier spacing is a reference subcarrier spacing configured by TDD, or a subcarrier spacing of the DCI or PDCCH carrying the second beam indication information, or a subcarrier spacing of a downlink BWP for transmitting the DCI or PDCCH carrying the second beam indication information, or a maximum value or minimum value of subcarrier spacings of configured downlink BWPs or active downlink BWPs, or a subcarrier spacing of a PUCCH/PUSCH for transmitting HARQ feedback for the DCI or PDCCH carrying the second beam indication information, or a subcarrier spacing of an uplink BWP of a PUCCH/PUSCH for transmitting HARQ feedback for the DCI or PDCCH carrying the second beam indication information, or a maximum value or a minimum value of subcarrier spacings of configured uplink BWPs or active uplink BWPs, or a maximum value or a minimum value of subcarrier spacings of SSBs, or a maximum value or a minimum value of subcarrier spacings of PRACHs, or a maximum value or a minimum value of subcarrier spacings of downlink and/or uplink carriers.

18. The repeater according to claim 1, wherein the first subcarrier spacing is an indicated subcarrier spacing.

19. A network device, **characterized in that** the network device comprises:
   a transmitting unit configured to transmit indication information for indicating an access link beam to a repeater, the indication information comprising a first information field for indicating a beam on an access link and a second information field for indicating a time resource, the time resource being related to a first subcarrier spacing and/or a second subcarrier spacing.

20. A communication system, **characterized in that** the communication system comprises a repeater as claimed in claim 1 and/or a network device as claimed in claim 19.

Access link beam

102

103

Control link

NCR-MT

Backhaul link

NCR-Fwd

101

103

# Fig. 1

201

the repeater receives indication information for indicating an access link beam, the indication information comprising a first information field for indicating a beam on an access link and a second information field for indicating a time resource, the time resource being related to a first subcarrier spacing and/or a second subcarrier spacing

# Fig. 2

Second SCS

DCI | Slot m (m=n/2) | Slot m+1 | ... | Slot m+floor(X/2)

duration/time resource indicated by DCI

First SCS

Slot n | Slot n+1 | Slot n+2 | Slot n+3 | ... | Slot n+X (Starting slot) | Slot n+X+1

Slot offset X

Symbol offset Y=2

Starting symbol

# Fig. 3A

**Fig. 3B**

**Fig. 3C**

**Fig. 3D**

**Fig. 3E**

**Fig. 4A**

**Fig. 4B**

**Fig. 4C**

**Fig. 4D**

Fig. 5A

Fig. 5B

Fig. 5C

Fig. 5D

**Fig. 5E**

**Fig. 6A**

**Fig. 6B**

**Fig. 6C**

Fig. 6D

Fig. 6E

Fig. 6F

Fig. 6G

**Fig. 7A**

**Fig. 7B**

**Fig. 7C**

Second
SCS

Slot n   DCI

duration/time resource indicated by DCI

First SCS

Slot m (m=n)

Slot

Symbol offset Y=3

## Fig. 7D

Time resources indicated by the same DCI

*y-th* time resource

*(y+1)-th* time resource

First SCS

Slot n

Slot n +X

Slot offset X

Symbol offset Y=4

## Fig. 8

901

the network device Transmits indication information for indicating an access link beam by to a repeater, the indication information including a first information field for indicating a beam on an access link and a second information field for indicating a time resource, the time resource being related to a first subcarrier spacing and/or a second subcarrier spacing

## Fig. 9

1000

Repeater    1001

Receiving unit

# Fig. 10

1100

Network device    1101

Transmitting unit

# Fig. 11

1200

1250

1220     1230          1210

1240

Memory

Program

Processor

Transceiver

# Fig. 12

## INTERNATIONAL SEARCH REPORT

| International application No. |
|---|
| **PCT/CN2023/076646** |

| A. | CLASSIFICATION OF SUBJECT MATTER |
|---|---|

H04W16/26(2009.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; VEN; CNKI; ENTXT; 3GPP: 转发器, 中继器, 网络控制, 波束, 接入链路, 指示, 资源, 子载波间隔, 起始位置, 长度, 偏移, NCR, repeater, relay, beam, access link, AC link, beam indication, resource, SCS

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022253993 A2 (FRAUNHOFER GES FORSCHUNG) 08 December 2022 (2022-12-08) description, page 9, line 20-page 53, line 30 | 1-20 |
| A | ZTE CORP. "Further Discussion on RRM Requirements for NCR-MT" *3GPP TSG-RAN WG4 Meeting#105 R4-2219376*, 07 November 2022 (2022-11-07), pages 1-9 | 1-20 |
| A | CN 115516813 A (BEIJING XIAOMI MOBILE SOFTWARE CO., LTD.) 23 December 2022 (2022-12-23) entire document | 1-20 |
| A | WO 2022113809 A1 (SONY GROUP CORP.) 02 June 2022 (2022-06-02) entire document | 1-20 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2023** | **23 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/076646** |

| Patent document cited in search report | | | Publication date (day/month/year) | Patent family member(s) | | | Publication date (day/month/year) |
| --- | --- | --- | --- | --- | --- | --- | --- |
| WO | 2022253993 | A2 | 08 December 2022 | WO | 2022253993 | A3 | 12 January 2023 |
| CN | 115516813 | A | 23 December 2022 | None | | | |
| WO | 2022113809 | A1 | 02 June 2022 | None | | | |

Form PCT/ISA/210 (patent family annex) (July 2022)